Europäisches Patentamt

European Patent Office

Office européen des brevets

(19)

(11) Publication number : **0 124 490**
**B1**

(12) **EUROPEAN PATENT SPECIFICATION**

(45) Date of publication of patent specification :
21.10.87

(51) Int. Cl.⁴ : **H 05 B   7/18, F 27 D  11/08**

(21) Application number : **84830070.3**

(22) Date of filing : **16.03.84**

(54) **Improved conductive bottom for direct current electric arc furnaces.**

(30) Priority : **31.03.83 IT 4802783**
**02.02.84 IT 4764184**

(43) Date of publication of application :
**07.11.84 Bulletin 84/45**

(45) Publication of the grant of the patent :
**21.10.87 Bulletin 87/43**

(84) Designated contracting states :
**AT BE CH DE FR GB LI LU NL SE**

(56) References cited :
**EP-A- 0 058 817**
**GB-A- 2 042 309**
**US-A- 4 228 314**

(73) Proprietor : **ITALIMPIANTI Società Italiana Impianti p.a.**
**Piazza Piccapietra, 9**
**I-16121 Genova (IT)**

(72) Inventor : **Repetto, Eugenio**
**Via G. Casalinuovo, 3**
**I-00142 Roma (IT)**
Inventor : **Tesini, Francesco**
**Via Padre Semeria, 7/B**
**I-16131 Genova (IT)**

(74) Representative : **Mariani, Giulio**
**c/o Centro Sperimentale Metallurgico SpA P.O. BOX 10747**
**I-00100 Roma Eur (IT)**

### Description

The present invention relates to an improvement in direct current electric arc furnaces. More precisely, the invention relates to an improvement in the conductive bottom of these electric furnaces. Here the term « conductive bottom » refers to the assembly of metal, refractory and/or conductive refractory parts, situated on the bottom of the furnaces, through which the electric circuit is closed.

At the moment there are two fundamental types of conductive bottoms. In the first type metal bars are buried in the refractory bottom, emerge inside the furnace and are connected together at their ends to form a single conductor. A variation of this first type of furnace involves metal bars in contact on the underside with a layer of graphite which rests on electrically-conductive brickwork. This brickwork rests on a cooled metal section that ensures the current return, of the furnace bottom, electrically insulated from the rest of the body. This variation is described in GB-A-2 017 463, corresponding to US-A-4 228 314.

The main drawback of this first type of conductive bottom is that the whole of the bottom is involved in electrical conduction and in thus affected by the consequent modifications, which makes the adaptation of existing furnaces and bottom repairs long, difficult operations. Moreover, the layer of electrically conductive bricks results in a big dispersion of energy owing to the Joule effect, while not offering good resistance to the possible infiltration of liquid metal, thus posing further safety problems.

The second type of conductive bottom, exemplified in a type of embodyment in GB-A-2 042 309, provides for a prefabricated conductive part, in contact with the metal bath on one side and on the other with a layer of graphite carried on electrically conductive brickwork. In this application, the prefabricated part consists of a metal plate which has on its face farthest from the bath a series of bars, buried in refractory material.

Current return is via a large, cooled metal section on the furnace bottom.

The advantage of this embodiment is easy repair of the furnace, by replacing the prefabricated element. However, the mainly metal structure of the prefabricated part will predictably result in rapid wear. There remain, however, the drawbacks of the first type of conductive bottom. Direct current electric arc furnaces also have other problems essentially bound up with their structure. For instance, an important problem is the distribution of the heat generated by the arc throughout the metal bath. Owing to the use of only one electrode there is marked overheating of the part of the bath beneath the electrode ; furthermore, because direct current is employed, no strong currents are generated by electromagnetic effects to transport the liquid metal and ensure rapid diffusion of heat in the peripheral parts of the bath. It can thus be difficult to melt scrap rapidly, and the central part of the furnace bottom, made of current-conducting material which tends to be the most delicate, may be seriously overheated even to the point of breakthrough. The purpose of the present invention is to eliminate most of the abovementioned drawbacks inherent in the solutions known at the present state of the art, by providing a conductive bottom that is cheap and easy to repair, while ensuring very low heat dispersion and low risk of breakthrough.

According to the present invention, as claimed in Claim 1, an improved bottom for direct current arc furnaces is advantageously formed of an assembly of parts that work together, namely :

at least one removable electrically conductive prefabricated element in contact with the metal bath and resting on

an intermediate part of electrically conductive granular material resting on

a terminal metal part, electrically insulated from the shell of the furnace, consisting of a conductive metal plate having on the face farthest from the bath a metal rod which runs through the refractory bottom of the furnace and protrudes partially therefrom ;

means for cooling the end of the metal rod outside the furnace.

The removable prefabricated part can consist of a refractory casting with metal bars passing through it or alternatively of an electrically conducting refractory casting.

Between this prefabricated element and the intermediate part a platelike metal element can be inserted, preferably as an integral part of the prefabricated element, to provide stiffening.

Furthermore, according to this invention, it is possible to insert bodies in the furnace bottom through which known, controllable flows of gas can be introduced into the metal bath. Said gas — argon, for instance — bubbles through the bath, forming a rising current of bubbles whose function will be examined in greater detail ahead. These bodies for the introduction of gas into the bath can advantageously consist of porous bricks well known in traditional oxygen steelmaking. Of the various type of porous bricks available, those with orientated porosity are preferable ; in these, the refractory body of the brick is traversed from one end to the other by a series of thin, more or less parallel void channels. These bricks can be set in the centre of the furnace bottom or concentrically around the axis of the furnace, forming either a complete continuous ring or a number of symmetrically-located zones for introduction of the gas.

The gas supply to the zones concerned can be ensured via a series of independent lines, one for each zone, optionally connected to a manifold outside the furnace, inserted in the wall ; alternatively the various porous bodies can be connected directly to a single distributor, fed by a line coming from outside the furnace.

In any case, it would not appear that the details on the way the gas is carried from outside the furnace to the porous bodies is of decisive importance for the purpose of this invention ; hence the gas supply can be constructed in the manner and with the means most suitable for each individual situation.

Numerous advantages are assured by the improvement as per the present invention.

The gas bubbling into the furnace at a rate that is easily controlled for each porous body — e. g. between 5 and 50 Nl/s — favours the establishment of convection currents in the liquid steel. As these currents start from the overheated part of the furnace, or near to it, they ensure efficient removal of heat from that zone, with better, more rapid heating of the peripheral zones and hence shorter melting times. Another benefit intimately related to the bubbling of gas is that the furnace-bottom zone beneath the electrode, affected by the passage of the current for closure of the electric circuit and intrinsically more important and more delicate, is subject to less thermal stress because, as indicated above, the overheated part of the bath is largely eliminated by the convention currents generated by the passage of the gas.

Further cooling of the conducting part of the furnace bottom is provided by the gas that flows in the pipes or in the supply manifolds to the porous bricks ; these pipes or manifolds can be advantageously designed to optimize this cooling effect, thus lengthening the useful life of the furnace bottom.

Yet another advantage is the fact that after the flow of gas has passed through the bath, it can be used, if need be, for the formation of foamed slag, the composition of which can be controlled by means of compounds introduced through a special conduit in the electrode, adopting a technique well known to the experts.

In this way it is now possible to treat a whole series of steels — e. g. stainless steels — by foamed slags (usually obtained in the oxidizing phase by the addition of carbon) which it has hitherto been impossible to treat in this manner. In this case it is preferable to utilize an anular arrangement of porous bricks set concentrically around the axis of the furnace and of the extension of the electrode centreline. This arrangement ensures that the rising current of gas bubbling to the surface of the metal bath favours foaming under the tip of the electrode, so as to derive the greatest benefits from the formation of the foamed slag, essentially by screening the walls of the furnace from arc radiation. Finally, it seems likely that the inert gas bubbling in the zone of the electric arc and saturating the surrounding atmosphere reduces the absorption of gas, particularly nitrogen, by the bath.

This invention will now be described in relation to a type of embodiment indicated purely by way of exemplification without in any way limiting the objects and precepts of the invention. This embodiment is illustrated in the accompanying Figures, where :

Figure 1 shows a vertical section through a direct current electric arc furnace fitted with a conductive bottom improved as per this invention ;

Figure 2 shows a vertical section through part of the furnace where the porous bricks are installed, this being the version with one central porous zone ;

Figure 3 shows a section similar to that of Fig. 2 but in the version where several porous zones are set symmetrically around the axis of the furnace.

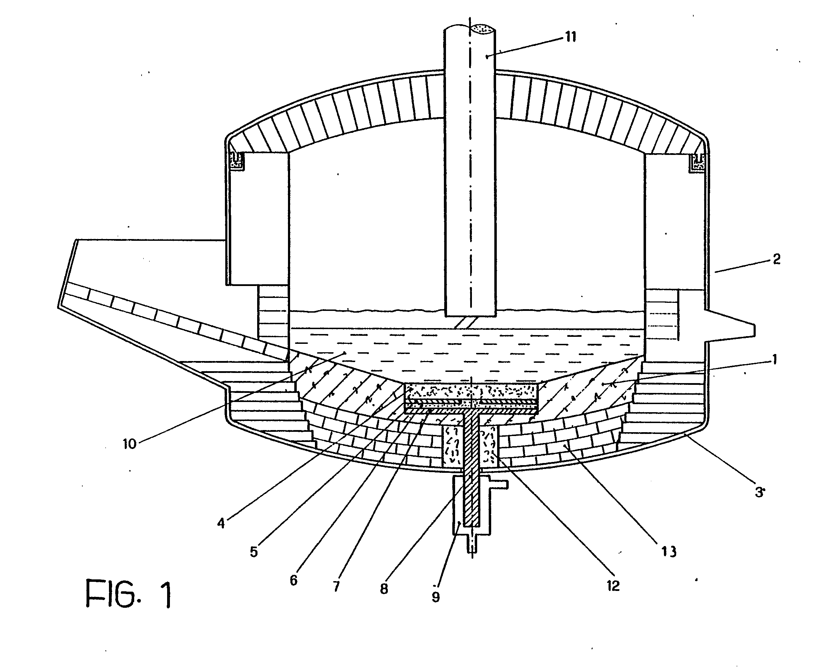

With reference to Fig. 1, at the centre of the hearth 1 of a furnace 2, in a specific recess, there is a metal plate 7 with a rod 8 on its lower face, extending downwards through the bottom refractory of the furnace and protruding outside the furnace itself. This rod 8 is electrically insulated from the metal shell 3 of the furnace.

The external part of rod 8 is sorrounded by a sleeve 9 through which cooling water is pumped. Of course, the rod can be cooled by other means, at a suitable depth.

On the upper face of metal plate 7 there is a loose layer 6 of granular material with good electrical conductivity, such as graphite in powder or grain form ; optionally with the addition of metal shavings, etc. The purpose of layer 6 is to ensure a good electrical connection among the various parts of the conductive bottom and also to permit the proper bedding of the prefabricated part 4, by eliminating any unevenness. On layer 6 rests the prefabricated part 4, the upper part of which is in contact with metal bath 10.

Provision is made for a metal stiffening element 5 integral with the lower face of part 4.

In use, the electric circuit is closed between electrode 11 and a clamping device, not shown, on rod 8 or sleeve 9. The electric current flows through the metal charge, the prefabricated part 4, parts 5 and 6 is collected by plate 7 and led outside the furnace by rod 8.

In order to facilitate erection and maintenance, part 12 of the refractory of the furnace bottom in the immediate vicinity of rod 8 is preferably rammed, while the remainder of the bottom 13 is of conventional refractory brick.

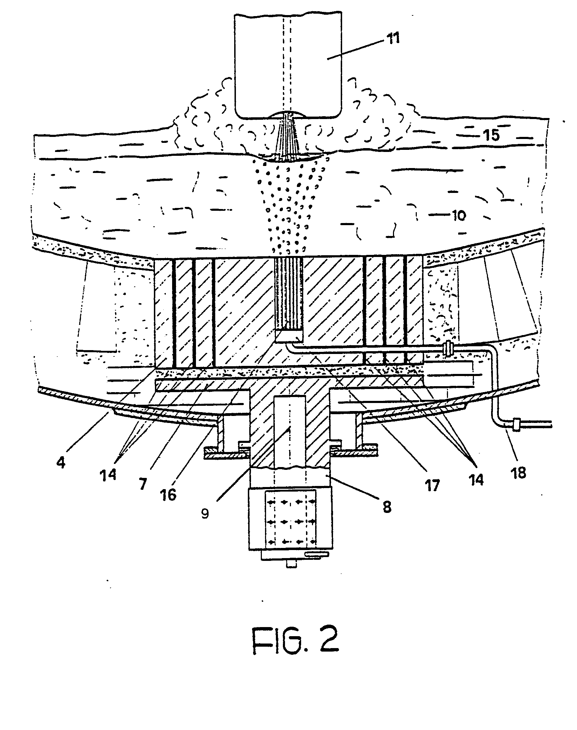

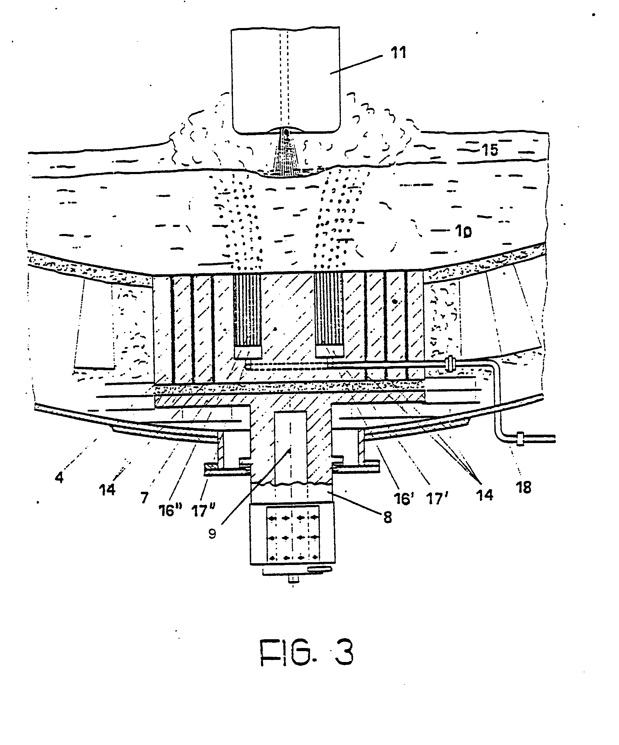

Figs 2 and 3 show only the central part of the furnace and include also part of the metal bath and the layer of slag, as well as the end part of the electrode with its tip dipping into the slag.

In Fig. 2, the number 4 indicates the prefabricated part where the current is conducted via metal bars 14, while 10 is the metal bath and 15 the layer of slag. Number 11 is the hollow electrode, 7 the metal plate and 8 the metal rod which collects the current. It is evident how the porous body 16 is buried in the prefabricated part 4, terminating at the upper end on the same level as 4 which forms part of the furnace bottom. The porous body 16 terminates at the lower end in a kind of metal capsule 17 to which is connected the gas supply line 18.

Fig. 3 illustrates two porous bodies 16' and 16" each terminating at the lower end in a capsule 17' and 17" which, in this case, form part of a single manifold (not illustrated) to which the gas supply line 18 is connected.

The rising column of gas bubbles leaving the void channels in porous bodies 16, 16' and 16" is schematized in both cases.

As is readily evident, the rising column of gas also entrains metal which, being in the zone affected by the current transport and especially the arc, is greatly overheated. Hence metal flows are generated ; these move from the hotter parts of the furnace to the cooler ones, thus speeding up the scrap melting process.

Furthermore, when the gas encounters the slag, whose composition is carefully controlled by feeding appropriate materials, e. g. through the conduit in the electrode, it causes foaming precisely where the presence of foamed slag is useful and necessary, namely around the tip of the electrode.

This possibility is another important advantage of the present invention, since only by bubbling gas is it possible to obtain foamed slag at any moment in the process and not — as in the known methods — merely during some phase of the process such as, for instance, during oxidizing operation.

The advantages of this embodiment are evident :

The invention is readily and cheaply adaptable to existing furnaces, the only essential modification being a hole through the furnace bottom.

Minimization of heat losses.

Very low risk of breakthrough, there being only one preferential outlet, namely along rod 8.

Limited electrical resistance.

It should be noted that the cooling envisaged for the free end of the metal rod is completely outside the furnace and is concentrated on the only potential breakthrough route. Trials have shown that under normal conditions this cooling is virtually superfluous and can be extremely limited.

Provision can be made for the installation of heat sensors around the metal rod to signal abnormal temperature rises as a result of the penetration of liquid metal. In this case, since the metal rod is an excellent conductor of heat and as it has a relatively small cross-section, it suffices to increase the flow of cooling water to solidify the liquid metal that has penetrated and hence permit the melting and pouring operations to be completed before starting on maintenance. During a series of trials, run a small 3.5-t pilot furnace, equipped with conductive bottom current return as per the present invention, regular operation was possible with a current of up to 12 kA, with an electrical resistance in the bottom of around 0.4 m Ohms.

Temperature rise of the furnace bottom caused by the passage of the current was limited, being in the 100-150 °C range ; this occurred after only a few minutes and then remained unchanged.

When the top part of the furnace was relined, it was seen that the bottom was in an excellent state, especially the prefabricated element 4, while maintenance operations were extremely easy.

## Claims

1. Improved conductive bottom for direct current electric arc furnaces of the type whereby the hearth of the furnace incorporates at least one removable electrically-conductive prefabricated element (4) in contact with the metal bath (10) and resting on an intermediate part (6) of electrically conductive granular material, said conductive bottom being characterised in that said intermediate part (6) of electrically conductive granular material rests on a terminal metal part (7, 8), electrically insulated from the shell (3) of the furnace, consisting of a conductive metal plate (7) with a single metal rod (8) on its face farthest from the bath (10), which passes through the refractory bottom of the furnace and protrudes partially therefrom, and in that cooling means (9) are provided to cool that end of said metal rod (8) which protrudes outside the furnace.

2. Improved conductive bottom as per Claim 1 whereby said metal rod (8) passes through a rammed part (12) of said refractory bottom of the furnace.

3. Improved conductive bottom as per Claim 1 or 2, whereby at least one body (16 ; 16', 16") is inserted in said removable electrically-conductive prefabricated element (4) to introduce a known, controllable flow of gas into the metal bath (10) above.

4. Improved conductive bottom as per Claim 3, whereby said body (16 ; 16', 16") consists of porous refractory bricks with orientated porosity.

5. Improved conductive bottom as per Claim 4, whereby said porous bricks are grouped in a single area in the centre of the electrically-conductive zone (4) of the furnace bottom.

6. Improved conductive bottom as per Claim 4, whereby said porous bricks are arranged around the periphery of the electrically-conductive zone (4) of the furnace bottom in the form of a circular ring.

7. Improved conductive bottom as per Claim 6, whereby said circular ring of porous bricks is interrupted, said porous bricks forming a plurality of gas-emission zones arranged symmetrically around the axis of the furnace.

8. Improved conductive bottom as per Claims 1 or 2, whereby said removable electrically-conductive prefabricated element (4) consists of an electrically conductive refractory casting.

9. Improved conductive bottom as per Claims 1 or 2, whereby a metal element (5) in the form of a plate, can be interposed between said prefabricated element (4) and said intermediate part (6), preferably as an integral part of said removable prefabricated element (4).

10. Improved conductive bottom as per Claims 1 or 2, whereby said removable electrically-conductive prefabricated element (4) consists of a refractory casting with metal bars (14) running through it.

**Patentansprüche**

1. Verbesserte leitfähige Sohle eines Gleichstrom-Lichtbogenofens der Bauart, bei der der Ofenherd mindestens ein abnehmbares, elektrisch leitfähiges, vorgefertigtes Element (4) umfasst, das mit dem Metallbad (10) in Kontakt steht und auf einer Zwischenteil (6) elektrisch leitfähigen körnigen Materials aufliegt, wobei dieser leitfähige Sohle dadurch gekennzeichnet ist, daß dieses Zwischenteil (6) aus elektrisch leitfähigem körnigem Material auf einem Metallendteil (7, 8) aufliegt, der elektrisch gegen den Ofenmantel (3) isoliert ist, bestehend aus einer leitfähigen Metallplatte (7) mit einem einzelnen Metallstab (8) auf der vom Bad abgekehrten Seite (10), der durch die feuerfeste Sohle des Ofens hindurch und zum Teil aus diesem herausragt, und daß zur Abkühlung des Endes dieses aus dem Ofen herausragenden Metallstabes (3) eine Kühlvorrichtung (9) vorgesehen ist.

2. Verbesserte Ofensohle nach Anspruch 1, dadurch gekennzeichnet, daß der Metallstab (8) durch einen gestampften Teil (12) der feuerfesten Ofensohle hindurchgeht.

3. Verbesserte Ofensohle nach Anspruch 1 oder 2, dadurch gekennzeichnet, daß mindestens ein Körper (16, 16', 16") in das abnehmbare, elektrisch leitfähige, vorgefertigte Element (4) zur Einleitung eines bekannten, regelbaren Gasstroms in das besagte Metallbad (10) eingesetzt ist.

4. Verbesserte Ofensohle nach Anspruch 3, dadurch gekennzeichnet, daß dieser Körper (16, 16', 16") aus porösen, feuerfesten Ziegeln mit gerichteter Porosität besteht.

5. Verbesserte Ofensohle nach Anspruch 4, dadurch gekennzeichnet, daß die porösen Ziegel in einem einzigen Bereich in der Mitte der elektrisch leitfähigen Zone (4) der Ofensohle zusammengefasst sind.

6. Verbesserte Ofensohle nach Anspruch 4, dadurch gekennzeichnet, daß die porösen Ziegel rund um den Umfang der elektrisch leitfähigen Zone (4) der Ofensohle herum in Form eines Ringes angeordnet sind.

7. Verbesserte Ofensohle nach Anspruch 6, dadurch gekennzeichnet, daß der kreisförmige Ring aus porösen Ziegeln unterbrochen ist, wobei die porösen Ziegel eine Vielzahl von Gasaustrittszonen bilden, die symmetrisch um die Ofenachse herum angeordnet sind.

8. Verbesserte Ofensohle nach Anspruch 1 oder 2, dadurch gekennzeichnet, daß das abnehmbare, elektrisch leitfähige, vorgefertigte Element (4) aus einem elektrisch leitfähigen, feuerfesten Gußteil besteht.

9. Verbesserte leitfähige Ofensohle nach Anspruch 1 oder 2, dadurch gekennzeichnet, daß ein Metallelement (5) in Plattenform zwischen dem vorgefertigten Element (4) und de Zwischenteil (6), vorzugsweise einteilig mit dem abnehmbaren, vorgefertigten Element (4), eingesetzt ist.

10. Verbesserte leitfähige Ofensohle nach Anspruch 1 oder 2, dadurch gekennzeichnet, daß das elektrisch leitfähige, vorgefertigte Element (4) aus einem feuerfesten Gußteil mit es durchsetzenden zwischengelegten Metallstäben (14) besteht.

**Revendications**

1. Sole conductrice perfectionnée pour fours électriques à arc à courant continu dans lesquels la sole du four comprend au moins un élément (4) électriquement conducteur, préfabriqué et amovible, en contact avec le bain de métal (10) et reposant sur une partie intermédiaire (6) en matériau granulaire électriquement conducteur, ladite sole conductrice étant caractérisée par le fait que la partie intermédiaire (6) en matériau granulaire électriquement conducteur repose sur un élément métallique terminal (7, 8), électriquement isolé de la paroi (3) du four, et consistant en une plaque de métal conducteur (7) munie d'une unique tige de métal (8) sur sa face la plus éloignée du bain (10), tige qui passe à travers la sole réfractaire du four et en dépasse partiellement, et par le fait que des moyens de refroidissement (9) sont prévus pour refroidir cette extrémité de la tige de métal (8) dépassant du four.

2. Sole conductrice perfectionnée selon la revendication 1, dans laquelle la tige de métal (8) passe à travers une partie damée (12) de ladite sole réfractaire du four.

3. Sole conductrice perfectionnée selon la revendication 1 ou 2, dans laquelle au moins un corps (16 ; 16', 16") est inséré dans ledit élément électriquement conducteur, préfabriqué et amovible (4) pour l'introduction dans le bain de métal (10) situé au-dessus d'un courant de gaz de débit connu et réglable.

4. Sole conductrice perfectionnée selon la revendication 3, dans laquelle ledit corps (16 ; 16', 16") est formé de briques réfractaires poreuses à porosité orientée.

5. Sole conductrice perfectionnée selon la revendication 4, dans laquelle lesdites briques poreuses sont groupées dans une seule aire au centre de la zone électriquement conductrice (4) de la sole du four.

6. Sole conductrice perfectionnée selon la revendication 4, dans laquelle lesdites briques poreuses sont disposées sur le pourtour de la zone électriquement conductrice (4) de la sole du four, sous forme d'une couronne.

7. Sole conductrice perfectionnée selon la revendication 6, dans laquelle ladite couronne de briques poreuses est interrompue, et les briques poreuses forment une pluralité de zones d'émission de gaz disposées symétriquement autour de l'axe du four.

8. Sole conductrice perfectionnée selon la revendication 1 ou 2, dans laquelle ledit élément (4) électriquement conducteur, préfabriqué et amovible consiste en une pièce moulée en matériau réfractaire électriquement conducteur.

9. Sole conductrice perfectionnée selon la revendication 1 ou 2, dans laquelle un élément métallique (5) en forme de plaque peut être interposé entre ledit élément préfabriqué (4) et ladite partie intermédiaire (6), de préférence en tant que partie intégrante de cet élément préfabriqué amovible (4).

10. Sole conductrice perfectionnée selon la revendication 1 ou 2, dans laquelle ledit élément électriquement conducteur, préfabriqué et amovible (4) consiste en une pièce moulée en matériau réfractaire traversée par des barres de métal (14).

FIG. 1

FIG. 2

FIG. 3